# EUROPÄISCHE PATENTSCHRIFT

(11) **EP 1 449 425 B1**
(45) Veröffentlichungstag und Bekanntmachung des Hinweises auf die Patenterteilung: **10.09.2008**
(21) Anmeldenummer: 04002110.7
(22) Anmeldetag: 31.01.2004
(51) Int. Cl.: A01F 12/44, A01D 41/127

(54) **Verfahren und Vorrichtung zum Trennen eines Erntegutstroms**
Process and device for separating a flow of harvest crop
Procédé et dispositif pour séparer un courant de produits de récolte

(30) Priorität: 21.02.2003 DE 10307705
(43) Veröffentlichungstag der Anmeldung: 25.08.2004
(73) Patentinhaber: CLAAS Selbstfahrende Erntemaschinen GmbH, 33428 Harsewinkel (DE)
(72) Erfinder: Baumgarten, Joachim, Dr., 48361 Beelen (DE); Holtmann, Bernd, 48324 Sendenhorst (DE); Scholle, Hendrik, 32051 Herford (DE); Peters, Heinz, 48231 Warendorf (DE)

(56) Entgegenhaltungen:
- DE-A- 4 406 140
- DE-A- 19 807 145
- US-A- 4 934 985

## Beschreibung

Die vorliegende Erfindung betrifft ein Verfahren und eine Vorrichtung zum Trennen eines Erntegutstroms, der wenigstens zwei Materialanteile, als Nutzmaterial bzw. Abfallmaterial bezeichnet, enthält, in einen Nutzmaterialstrom und einen Abfallmaterialstrom, in denen jeweils das Nutzmaterial bzw. das Abfallmaterial konzentriert sind.

Jeder Trennvorgang ist ein Kompromiss zwischen drei einander zuwider laufenden Anforderungen. Ein hoher Durchsatz des Trennverfahrens ist erforderlich, um die eingesetzten Ressourcen wie Maschinen und Arbeitskraft wirtschaftlich zu nutzen und die Kosten der Trennung gering zu halten. Mit steigendem Durchsatz nimmt jedoch die Selektivität der Trennung ab. Eine hohe Selektivität der Trennung bedeutet einerseits, dass der Anteil an Nutzmaterial, der in den Abfallmaterialstrom gelangt, möglichst gering sein soll, das heißt, das im Erntegutstrom enthaltene Nutzmaterial soll möglichst vollständig gewonnen werden. Andererseits soll auch im Nutzmaterialstrom möglichst wenig restliches Abfallmaterial enthalten sein. Geringe Verluste an Nutzmaterial sind im Allgemeinen nur erreichbar, wenn dafür in Kauf genommen wird, dass Abfallmaterial in den Nutzmaterialstrom gelangt, was wiederum die Weiterverarbeitbarkeit und den Wert des so gewonnenen Nutzmaterials beeinträchtigt. Eine hohe Reinheit des Nutzmaterialstroms muss im Allgemeinen mit Verlusten am Nutzmaterial erkauft werden.

Um diese sich zuwiderlaufenden Anforderungen miteinander zu vereinbaren, hat es sich als zweckmäßig erwiesen, zweistufige Trennverfahren durchzuführen, bei denen in einem ersten Trennschritt ein vorgereinigter Strom erzeugt wird, bei dem es im wesentlichen darauf ankommt, dass das Nutzmaterial in diesem möglichst vollständig enthalten ist und ebenfalls darin enthaltene Reste an Abfallmaterial hingenommen werden. Wichtig ist, dass der Durchsatz des vorgereinigten Stroms im Vergleich zum ursprünglichen Erntegutstrom deutlich verringert ist, so dass der zweite Trennschnitt, der auf eine möglichst vollständige Abtrennung des Abfallmaterials ausgelegt ist, effektiv durchgeführt werden kann.

Eine zweistufige Trennung von Korn und Nichtkornmaterial ist bei Mähdreschern allgemein verbreitet. Als Beispiel kann US 4 934 985 genannt werden, die einen Mähdrescher beschreibt, bei dem ein erster Trennschritt mit Hilfe eines Dreschzylinders und Separatorzylindern den Erntegutstrom aufteilt in Stroh, das ausgeworfen wird, und einen Korn und Kaff, d.h. Spelzen und feinen Halmbruch, enthaltenden Strom, der in einem zweiten Trennschritt nachgereinigt wird.

Die Abscheidung des vorgereinigten Stroms erfolgt herkömmlicherweise über sogenannte Abscheidekörbe, in Form von durchlöcherten Blechen oder Sieben, die jeweils einen Rotor umgebend angeordnet sind und das den vorgereinigten Strom bildende Korn-Kaff-Gemisch durchlassen, während das Stroh vom Rotor weitergefördert und schließlich ausgeworfen wird. Diese Abscheidekörbe sind als Blechkörbe, das heißt, Bleche, in die Löcher mit einer festen, für ein gewünschtes Erntegut spezifischen Größe eingebracht sind, oder als Drahtkörbe ausgebildet, die durch in definierten Abständen angeordnete, mit Bohrungen versehene Leisten und Rundstähle (Drähte), die durch die Bohrungen geführt werden, gebildet sind. Die Geometrie der Öffnungen ist bei allen diesen Abscheidekörben unveränderlich. Eine Anpassung an die Anforderungen verschiedener Druschfrüchte ist daher nur durch einen Austausch der Abscheidekörbe oder durch Verändern ihrer Öffnungsgeometrie, indem z.B. zusätzliche Leisten oder Bleche eingeschraubt werden, möglich. Eine solche Anpassung ist sehr zeitaufwändig und, wenn mehrere Abscheidekörbe mit unterschiedlichen Lochabmessungen bereitgehalten werden müssen, auch kostspielig.

Doch selbst wenn stets an die jeweils zu verarbeitende Druschfrucht angepasste Körbe verwendet werden, wird mit der gegenwärtigen Technik im Allgemeinen kein optimales Trennergebnis erreicht. Der Grund hierfür sind die Eigenschaften des Erntematerials selbst, die sich insbesondere in Abhängigkeit von dessen Feuchtigkeit stark unterscheiden können. Wenn man annimmt, dass die erste Trennstufe einer zweistufigen Trennvorrichtung an ein bestimmtes Erntegut mit einem bestimmten Feuchtigkeitsgrad gut angepasst ist, so dass sie mit hohem Durchsatz an Erntegut betrieben werden kann und einen vorgereinigten Strom mit geringem Abfallanteil liefert, so wird man im Allgemeinen aus Wirtschaftlichkeitsgründen die zweite Trennstufe nicht leistungsfähiger dimensionieren, als zur Verarbeitung dieses vorgereinigten Stroms erforderlich ist. Ist das Erntegut trockener, so erleichtert dies die Trennung in der ersten Stufe, so dass diese im Prinzip mit einem höheren Durchsatz gefahren werden könnte, ohne dass sich dadurch der Nutzmaterialanteil in ihrem Abfallmaterialstrom über ein zulässiges Maß hinaus erhöht. Mit zunehmender Trocknung neigt das Erntegut aber auch zur vermehrten Bildung von kleinen Bruchstücken, die in den vorgereinigten Strom gelangen und dessen Abfallanteil erhöhen. Ein erhöhter Durchsatz der ersten Trennstufe führt daher zu einer überproportionalen Zunahme des Durchsatzes, der von der zweiten Trennstufe verarbeitet werden muss. Diese kann daher leicht überlastet werden, mit der Folge, dass ihre Reinigungswirkung unzureichend wird oder nur unter Inkaufnahme eines hohen Verlustes an Nutzmaterial erreichbar ist. Allgemein kann man feststellen, dass die herkömmlichen zweistufigen Trennverfahren und -vorrichtungen jeweils nur für einen bestimmten Trocknungsgrad des Erntegutes eine optimale Wirtschaftlichkeit erreichen, bei der beide Stufen an ihrer oberen Leistungsgrenze arbeiten. Ist die Trocknung stärker, so muss die erste Stufe unterhalb ihrer Leistungsgrenze gefahren werden, um die zweite nicht zu überlasten, bei höherer Feuchtigkeit ist es umgekehrt.

Ein Mähdrescher mit Vorrichtungen zum Erfassen von Kornverlusten, die an einem Abfallmaterialstrom angeordnet sind, ist aus DE 21 06 970 C3 bekannt. Die Erfassungsergebnisse dieser Vorrichtungen werden genutzt, um die Fahrgeschwindigkeit des Mähdreschers automatisch zu regeln oder um Hinweise zum Regeln der Fahrgeschwindigkeit für den Fahrer des Mähdreschers zu erzeugen.

Aufgabe der vorliegenden Erfindung ist, ein Verfahren und eine Vorrichtung zum wenigstens zweistufigen Trennen eines Erntegutstroms in einen Nutzmaterialstrom und einen Abfallmaterialstrom anzugeben, die auch bei wechselnden Eigenschaften des Erntegutstroms einen Betrieb beider Stufen an ihrer oberen Leistungsgrenze und damit eine optimale Wirtschaftlichkeit ermöglichen.

Die Aufgabe wird gelöst durch ein Verfahren mit den Merkmalen des Anspruchs 1 bzw. eine Vorrichtung mit den Merkmalen des Anspruchs 15. Durch Regeln der Selektivität der ersten Trennstufe lässt sich der Durchsatz des von der zweiten Trennstufe zu verarbeitenden vorgereinigten Stroms beeinflussen. Das heißt, wenn der zu verarbeitende Erntegutstrom trockener ist, als einer aktuellen Einstellung der Selektivität der ersten Stufe entspricht, so kann durch Erhöhen der Selektivität der Durchsatz der zweiten Stufe reduziert und so eine Überlastung vermieden werden.

Um eine Überlastung zu erkennen, muss wenigstens eine mit der Menge an Nutzmaterial in den Abfallmaterialströmen verknüpfte Größe erfasst werden. Vorzugsweise geschieht dies getrennt für jeden der zwei Abfallmaterialströme. So kann auch eine gleichzeitige Überlastung beider Stufen erkannt und ihr durch Vermindern des Durchsatzes des der ersten Stufe zugeführten Erntegütstroms entgegengewirkt werden.

Vorzugsweise wird direkt die in einem Abfallstrom enthaltene Menge an Nutzmaterial durch Messung an dem Abfallmaterialstrom nach dem Trennschritt erfasst. Dies kann z.B. auf akustischem Wege durch Erfassung eines Aufprallgeräuschs des Abfallmaterialstroms geschehen, welches für in dem Strom enthaltene Körner und Halme unterschiedlich ist.

Eine andere Möglichkeit ist, die im Abfallmaterialstrom enthaltene Menge an Nutzmaterial zu erfassen durch Messen des Materialdurchsatzes des Trennschritts, der den Abfallmaterialstrom ergibt, wobei dann die Menge an verlorengehendem Nutzmaterial z.B. mit Hilfe einer empirisch ermittelten Tabelle oder Funktion gefolgert werden kann.

Eine weitere Möglichkeit ist, im zweiten Trennschritt neben dem zweiten Abfallmaterialstrom und dem Nutzmaterialstrom noch einen Restmaterialstrom abzutrennen, dessen Material in dem zweiten Trennschritt nicht sicher in Nutzmaterial und Abfallmaterial aufgetrennt werden konnte, und den Materialdurchsatz dieses Reststroms zu erfassen.

Vorzugsweise wird die Selektivität des ersten Trennschritts so geregelt, dass sich gleiche Anteile an Nutzmaterial in beiden Abfallmaterialströmen einstellen.

Eine Anpassung der Selektivität der Trennung an die erfassten Anteile von Nutzmaterial in den Abfallmaterialströmen kann vollautomatisch erfolgen, oder es kann lediglich ein Hinweis an einen Benutzer der Maschine erzeugt werden, dass die Selektivität erhöht oder gesenkt werden sollte, wobei es dann dem Benutzer obliegt, eine entsprechende Einstellung vorzunehmen.

Wenn in beiden Abfallmaterialströmen die Nutzmaterialanteile einen Grenzwert überschreiten, so ist dies ein Hinweis darauf, dass beide Trennstufen überlastet sind, und dass der Durchsatz des Erntegutstroms verringert werden sollte. Umgekehrt sollte, um einen wirtschaftlichen Betrieb zu ermöglichen, der Durchsatz an Erntegut erhöht werden, wenn der Anteil ein Nutzmaterial in beiden Abfallmaterialströmen einen Grenzwert unterschreitet. Wenn die Erfindung an einer fahrbaren Erntemaschine eingesetzt wird, empfiehlt es sich, den Durchsatz des Erntegutstroms durch Anpassen der Fahrgeschwindigkeit der Erntemaschine zu erhöhen und/oder zu verringern.

Eine bevorzugte Möglichkeit ist, die Fahrgeschwindigkeit der Erntemaschine anhand der erfassten Nutzmaterialanteile automatisch zu steuern, um so den Fahrer der Maschine zu entlasten. Um ein unerwartetes Beschleunigen und Abbremsen der Maschine zu vermeiden, ist es jedoch auch möglich, lediglich einen Hinweis an den Fahrer der Erntemaschine zu erzeugen, dass die Fahrgeschwindigkeit erhöht bzw. verringert werden kann.

Weitere Merkmale und Vorteile der Erfindung ergeben sich aus der nachfolgenden Beschreibung eines Ausführungsbeispiels unter Bezugnahme auf die beigefügten Figuren. Es zeigen:
- Fig. 1: einen schematischen Schnitt durch einen Mähdrescher, an dem die vorliegende Erfindung realisiert ist;
- Fig. 2: eine zweite Ausgestaltung eines erfindungsgemäßen Mähdreschers
- Fig. 3: einen Querschnitt durch den Mähdrescher aus Fig. 2;
- Fig. 4: Kennkurven des Kornverlusts als Funktion des Durchsatzes für die verschiedenen Trennstufen des Mähdreschers bei unterschiedlichen Erntebedingungen; und
- Fig. 5 und 6: jeweils ein Flussdiagramm eines Steuerverfahrens für den Mähdrescher.

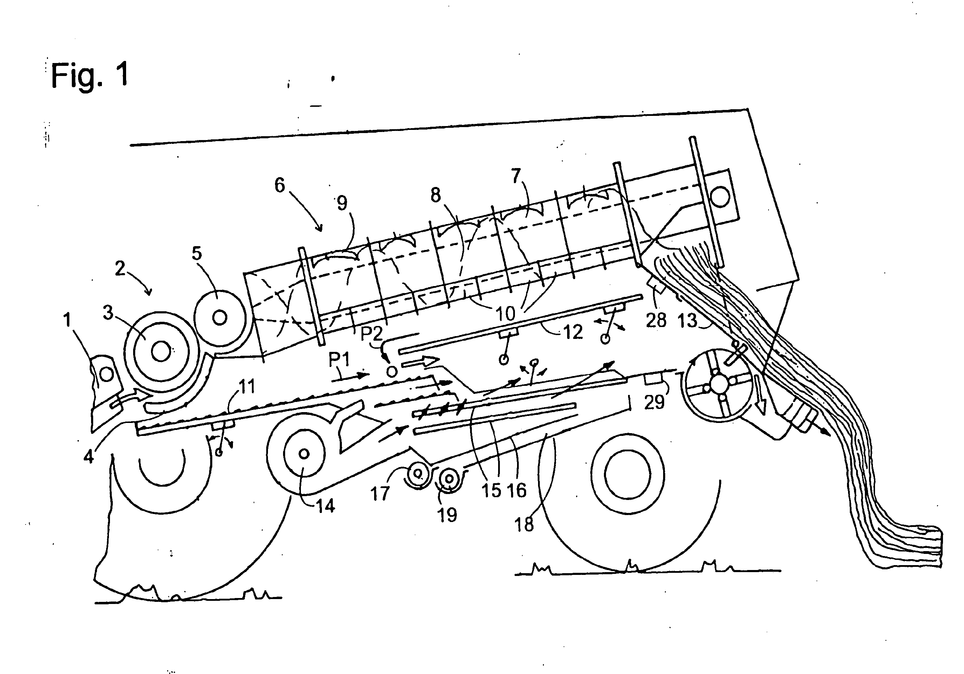

Fig. 1 zeigt einen schematischen Schnitt durch den hinteren Bereich eines Mähdreschers als Beispiel für eine erfindungsgemäße Trennvorrichtung. Bei einem solchen Mähdrescher ist ein zu trennender Erntegutstrom durch gemähtes Getreide gebildet, und Ziel der Trennung ist, einen Nutzmaterialstrom, der in möglichst reiner Form die Körner des Getreides enthält, und einen Abfallmaterialstrom aus den Nichtkornbestandteilen zu gewinnen. Im nicht gezeigten vorderen Bereich des Mähdreschers wird das gemähte Getreide von einem Mähtisch aufgenommen und von einer nur ausschnittweise dargestellten Fördereinrichtung 1 einer tangential wirkenden Drescheinrichtung 2 zugeführt. Die Drescheinrichtung 2 ist im wesentlichen aufgebaut aus einer Dreschtrommel 3 mit quer zur Fahrrichtung des Mähdreschers orientierter Achse, die an ihrem Außenmantel mit Reibelementen bestückt ist und auf einem Teil ihres Umfangs von einem Dreschkorb 4 umgeben wird. Ein Teil der in der Drescheinrichtung 2 von den Halmen getrennten Körner fällt durch Löcher des Dreschkorbes 4 auf einen Förderboden 11, auf dem diese, wie durch einen Pfeil P1 angedeutet, entgegen der Fahrtrichtung des Mähdreschers durch Rüttelbewegungen gefördert werden.

Der Hauptstrom des Mähgutes wird jedoch zwischen Dreschtrommel 3 und Dreschkorb 4 hindurchgeführt und mit Unterstützung durch eine Leittrommel 5 einer Abscheideeinrichtung 6 zugeführt.

Die Abscheideeinrichtung 6 ist hier rein exemplarisch dargestellt als ein zylindrisches, an seinen Enden offenes Gehäuse 7, in dem über seine gesamte Länge ein Förderorgan 8 drehantreibbar gelagert ist. Durch die Drehung des Förderorgans 8 wird das Mähgut auf einer schraubenlinienförmigen Bahn durch die Abscheideeinrichtung 6 gefördert. Von einer Oberseite des Gehäuses 7 ins Innere vorstehende Rippen 9 fördern eine Durchknetung des Mähgutes, wenn der äußere Rand der Wendel des Förderorgans 8 an ihnen vorbeistreicht. Die Steigung der Rippen 9 in Bezug auf die Förderrichtung des Mähguts im Gehäuse 7 ist verstellbar. Dadurch kann die Fördergeschwindigkeit des Mähguts in der Abscheideeinrichtung 6 variiert werden. Die Fördergeschwindigkeit muss groß genug sein, damit am Eingang der Abscheideeinrichtung 6 keine Verstopfung auftritt; andererseits sollte sie möglichst klein sein, um eine lange Verweildauer des Mähguts in der Trenneinrichtung und eine möglichst vollständige Abtrennung des Korns zu erreichen.

Selbstverständlich kann die Fördergeschwindigkeit auch über die Drehzahl des Förderorgans 8 beeinflusst werden. Mit steigender Drehzahl des Förderorgans 8 wächst nicht nur die Fördergeschwindigkeit, sondern auch die Fliehkraft und damit die Kraft auf das Nutzmaterial, die dessen Abscheidung antreibt. Gleichzeitig nimmt jedoch die Verweildauer des Mähguts in der Trenneinrichtung ab. Die beste Drehzahl des Förderorgans ist die, bei der Abscheidekraft und Verweildauer ein gemeinsames Optimum zu erreichen.

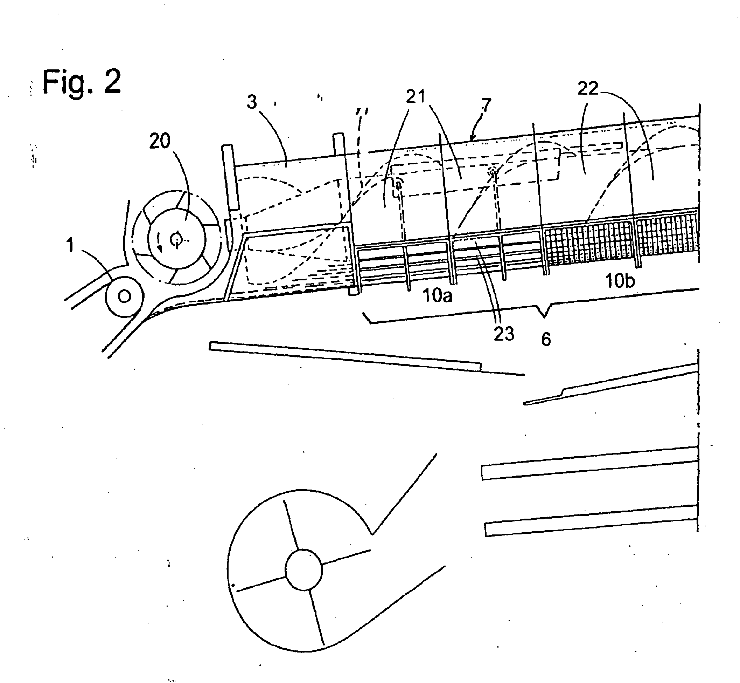

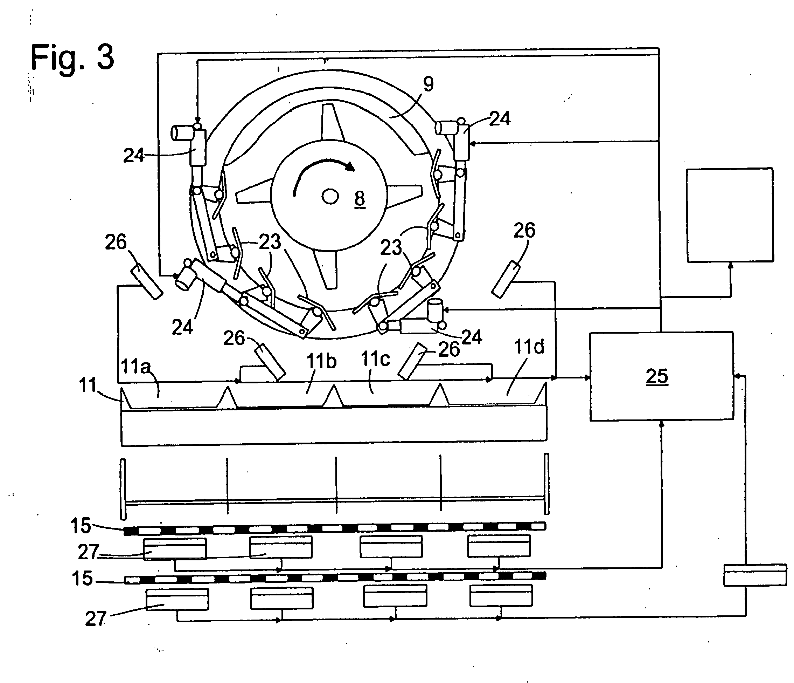

Der untere Bereich des Gehäuses 7 ist durch Abscheidekörbe 10 gebildet, die Öffnungen mit einstellbaren Abmessungen aufweisen. Der Aufbau dieser Abscheidekörbe 10 wird an späterer Stelle mit Bezug auf Fig. 2 und 3 noch genauer erläutert.

Körner, Spreu und Feinstroh, die durch die Öffnungen der Abscheidekörbe 10 aus der Abscheideeinrichtung 6 herausgeschleudert werden, fallen auf einen sogenannten Rückführboden 12. Dieser Rückführboden 12 ist rüttelnd bewegt, so dass auf ihm gesammeltes Material in Fahrtrichtung des Mähdreschers in Richtung des Pfeils P2 befördert wird und schließlich auf dem Förderboden 11 mit dem bereits in der Drescheinrichtung 2 abgeschiedenen Korn zusammentrifft, um einen Materialstrom zu bilden, der hier als vorgereinigter Strom bezeichnet wird.

Das während des Durchgangs durch die Abscheideeinrichtung 6 weitestgehend vom Korn befreite Grobstroh wird am rückseitigen Ende der Abscheideeinrichtung 6 ausgeworfen und fällt über eine Rutsche 13 zurück auf den Boden.

Die Drescheinrichtung 2 und die Abscheideeinrichtung 6 bilden so eine erste Trennstufe oder Abscheidestufe, die einerseits den vorgereinigten Strom und andererseits einen aus dem ausgedroschenen Stroh bestehenden ersten Abfallmaterialstrom liefert.

Eine zweite Trennstufe oder Reinigungsstufe ist im wesentlichen aufgebaut aus einem Gebläse 14 und einer im Windstrom des Gebläses 14 liegenden Gruppe von Siebböden 15, die in einem nicht dargestellten Rahmengestell zu einer Schwingbewegung angetrieben sind und mit dem vorgereinigten Strom beschickt werden. Das im vorgereinigten Strom enthaltene Korn rieselt durch die schwingenden Siebböden 15 hindurch auf einen abschüssigen ersten Leitboden 16. Am unteren Ende des Leitbodens 16 ist eine Förderschnecke 17 angeordnet, die das Korn zu einem Elevator (nicht dargestellt) und über diesen in einen Korntank (nicht dargestellt) fördert.

Leichte Bestandteile des vorgereinigten Stroms werden während des Siebens vom Wind des Gebläses 14 mitgenommen und als ein zweiter Abfallstrom auf den Boden ausgeschieden. Bestandteile des vorgereinigten Stroms, die die Siebböden 15 auf ihrer gesamten Länge überquert haben, ohne durchgesiebt oder vom Gebläsewind mitgenommen zu werden, fallen schließlich auf einen zweiten abschüssigen Leitboden 18 und werden von einer an dessen unteren Ende angeordneten Förderschnecke 19 zurück zur Drescheinrichtung 2 oder zur Abscheideeinrichtung 6 gefördert, um diese erneut zu durchlaufen.

Fig. 2 zeigt einen Teil einer zweiten Ausgestaltung eines erfindungsgemäßen Mähdreschers. Sie unterscheidet sich von der Ausgestaltung der Fig. 1 dadurch, dass die Dreschtrommel 3 der Abscheideeinrichtung 6 in axialer Verlängerung vorgesetzt ist, und dass zwischen der Fördereinrichtung 1 und der Dreschtrommel eine quer zur Fahrtrichtung des Mähdreschers fördernde Schnecke 20 angeordnet ist, die das Mähgut in seitlicher Richtung zusammenrafft und dem Eingang der Drescheinrichtung 3 zuführt. Der Aufbau der Abscheideeinrichtung 6 und der nachfolgenden zweiten Trennstufe ist der gleiche wie bei der Ausgestaltung nach Fig. 1.

Wie in Figur 2 im Detail zu erkennen ist, setzt sich das Gehäuse 7 der Abscheideeinrichtung 6 aus mehreren axial aufeinander folgenden Segmenten 21, 22 zusammen, die sich durch die in ihrem unteren Bereich angebrachte Abscheidekörbe 10a, 10b unterscheiden. Während die Abscheidekörbe 10b der hinteren Segmente 22 in herkömmlicher Weise durch ein Drahtgitter gebildet sind, dessen Öffnungen feste Abmessungen haben, setzen sich die Abscheidekörbe 10a der vorderen Segmente 21 aus einer Mehrzahl von in Umfangsrichtung gestaffelten Lamellen 23 zusammen. Wie in dem Querschnitt der Fig. 3 zu erkennen ist, sind die Lamellen jeweils um eine zur Längsachse der Förderschnecke 8 parallele Achse schwenkbar, und mehrere benachbarte Lamellen 23 sind jeweils durch Viergelenke gekoppelt, so dass ihre Schwenkstellung durch einen gemeinsamen Linearaktor 24 gesteuert ist. Der Grad der Schrägstellung der Lamellen 23 beeinflusst zum einen die Breite der Spalte zwischen den Lamellen 23 und damit die freie Querschnittsfläche, über die Korn und Feinstroh aus der Abscheideeinrichtung 6 austreten können, und zum anderen das Ausmaß, in dem freie Kanten der Lamellen 23 in die Abscheideeinrichtung 6 hineinragen und Prallflächen für das Mähgut bilden, an denen dieses zusätzlich zerkleinert und gedroschen wird.

In Fig. 3 sind die Lamellen 23 zu vier jeweils durch einen gemeinsamen Linearaktor 24 gesteuerten Gruppen zusammengefasst. Eine elektronische Steuereinheit 25 steuert die Schwenkstellung jeder Gruppe von Lamellen 23 unabhängig von den anderen. Um das Gehäuse 7 herum sind Kornsensoren 26 jeweils so angeordnet, dass sie von zwischen den Lamellen einer Gruppe austretendem Korn getroffen werden. Es handelt sich um akustische Sensoren, die das von austretenden Körnern verursachte Geräusch registrieren, und die mit ihnen verbundene Steuereinheit 25 zählt die von den austreffenden Körnern pro Zeiteinheit verursachten Impulse und misst auf diese Weise die an jeder Gruppe von Lamellen 23 austretende Kornmenge.

Der Förderboden 11, auf den die ausgetretenen Körner schließlich fallen, ist entsprechend den Gruppen von Lamellen 23 in Querrichtung in beispielsweise vier Felder 11a bis d unterteilt, die jeweils die an einer Gruppe von Lamellen 23 ausgetretenen Körner auffangen und zu den Siebböden 15 weiter befördern. Unter den Siebböden 15 sind weitere Kornsensoren 27 in der Anzahl von Gruppen von Lamellen entsprechender Zahl und Anordnung platziert. Auch diese sind mit der Steuereinheit 25 verbunden, die anhand der von ihnen gelieferten Impulse in der Lage ist, zum einen den Korndurchsatz der Siebböden 15 und zum anderen durch Vergleichen der Signale von den verschiedenen Kornsensoren 27 die Verteilung des Korns über die Breite der Siebböden 15 hinweg einzuschätzen. Wenn eine Ungleichverteilung festgestellt wird, steuert die Steuereinheit 25 die Linearaktoren 24 an, um die Spalte einer Gruppe von Lamellen 23, die zu viel durchlassen, zu verengen oder die Breite der anderen Spalte zu vergrößern, um so eine gleichmäßige Verteilung des Korns auf den Siebböden 15 zu erreichen. Lokale Überladungen der Siebböden 15, die zu einem schlechten Reinigungsergebnis führen, werden so vermieden.

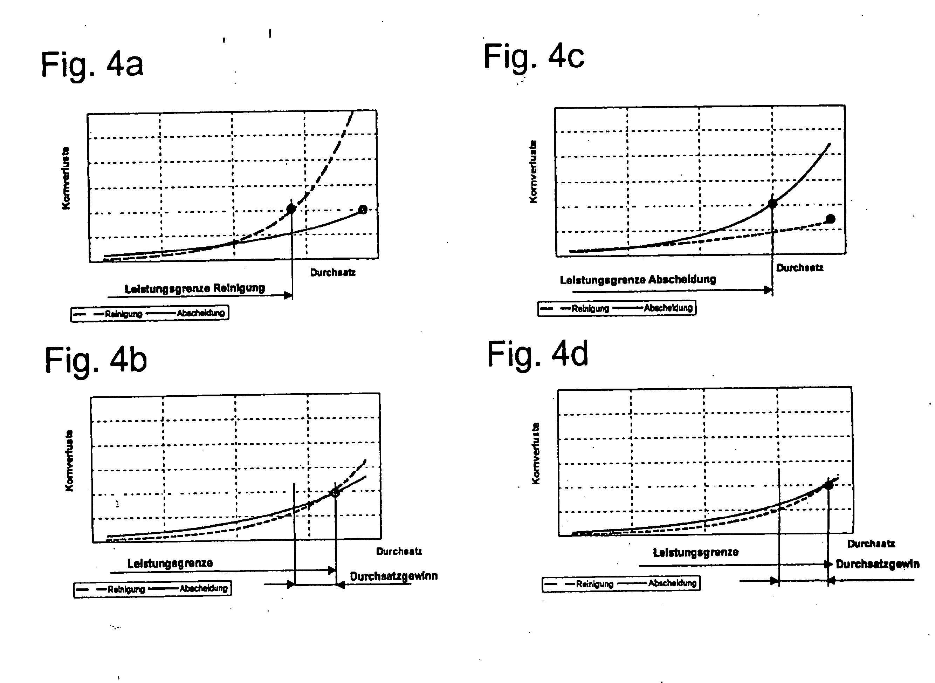

Weitere Kornsensoren 28, 29 sind an der Rutsche 13 bzw. am Ausgang der Reinigungsstufe angebracht (s. Fig. 1), um den Restanteil an Korn in den zwei Abfallströmen zu erfassen. Dieser Restanteil darf einen Grenzwert von beispielsweise jeweils 0,8 % der dem Korntank zugeführten Menge nicht überschreiten. Um den Mähdrescher möglichst wirtschaftlich zu nutzen, ist man bestrebt, diesen so schnell über ein abzuerntendes Feld zu fahren bzw. das Erntegut so schnell aufzunehmen, dass beide Trennstufen exakt an ihrem jeweiligen Grenzwert arbeiten. Um dies zu erreichen, muss die Stellung der Lamellen 23 je nach Trocknungsgrad des Erntegutes unterschiedlich sein. Wenn sehr trockenes Erntegut mit einer für einen mittleren Trocknungsgrad des Erntegutes angepassten Einstellung verarbeitet wird, ergibt sich die in Fig. 4a gezeigte Abhängigkeit des Kornverlustanteils vom Erntegutdurchsatz. Durch die starke Trocknung ist das Erntegut leicht zu dreschen und zu trennen, und die Abscheidungsstufe kann einen hohen Durchsatz erreichen, bevor der Kornverlust in dieser Stufe den Grenzwert von 0,8 % oder einen anderen vom Betreiber der Maschine favorisierten Grenzwert erreicht, wie durch die durchgezogene Kurve in Fig. 4a dargestellt. Gleichzeitig gelangt aber eine große Menge an Feinstroh, auch als Nichtkornbestandteile bezeichnet, d.h. Kurzstroh, Spreu und Blattteile, in die Reinigungsstufe, so dass deren Leistungsgrenze bereits bei einem deutlich niedrigeren Durchsatz des Ernteguts erreicht ist, wie die gestrichelte Kurve in dieser Figur zeigt. Um den Kornverlustgrenzwert nicht zu überschreiten, müsste also bei dieser Einstellung der Mähdrescher mit dem durch die Leistungsfähigkeit der Reinigungsstufe festgelegten Durchsatz an Erntegut gefahren werden.

Fig. 4b zeigt die Abhängigkeit der Kornverluste vom Erntegutdurchsatz bei einer optimal an das trockene Erntegut angepassten Einstellung. Bei dieser Einstellung sind die Spalte zwischen den Lamellen 23 verkleinert, so dass weniger Material hindurchtritt. Um dennoch eine ausreichend vollständige Abscheidung des Korns zu erreichen, muss der Durchsatz der Abscheidestufe reduziert werden; hierzu wird die Fördergeschwindigkeit in der Abscheideeinrichtung 6 verringert. Deshalb erreicht die durchgezogene Kurve in Fig. 4b, die den Kornverlust der Abscheidestufe als Funktion des Durchsatzes darstellt, den Grenzwert bei einem niedrigeren Durchsatz als die entsprechende Kurve der Fig. 4a. Gleichzeitig führt diese Stellung der Lamellen dazu, dass weniger Feinstroh in die Reinigungsstufe gelangt. Diese erreicht ihre Leistungsgrenze daher erst bei einem deutlich höheren Durchsatz als in Fig. 4a. Da die Abscheidestufe auch erst bei diesem Durchsatz ihre Leistungsgrenze erreicht, kann der Mähdrescher an dieser gegenüber Fig. 4a erhöhten Leistungsgrenze betrieben werden.

Fig. 4c zeigt die Kornverluste von Reinigungs- und Abscheidungsstufe, wenn das zu verarbeitende Erntegut feuchter ist, als der Einstellung der Stufen entspricht. Hier ist es die Abscheidungsstufe, die zuerst ihre Leistungsgrenze erreicht und die Ernteleistung des Mähdreschers als ganzes begrenzt. Da wenig Feinstroh entsteht und in die Reinigungsstufe gelangt, könnte diese bei einem Durchsatz, der der Leistungsgrenze der Abscheidungsstufe entspricht, ohne weiteres einen stärkeren Materialstrom verarbeiten als den, den sie tatsächlich empfängt. In diesem Fall wird gemäß der Erfindung der Übertritt von der Abscheidungsstufe in die Reinigungsstufe erleichtert, indem die Spalte zwischen den Lamellen 23 verbreitert werden.

Hierdurch nimmt die Leistungsfähigkeit der Abscheidungsstufe zu, und der Erntegutdurchsatz kann bis zu einem Wert erhöht werden, bei dem die Kornverluste beider Stufen gleichzeitig ihren Grenzwert erreichen, wie in Fig. 4d gezeigt.

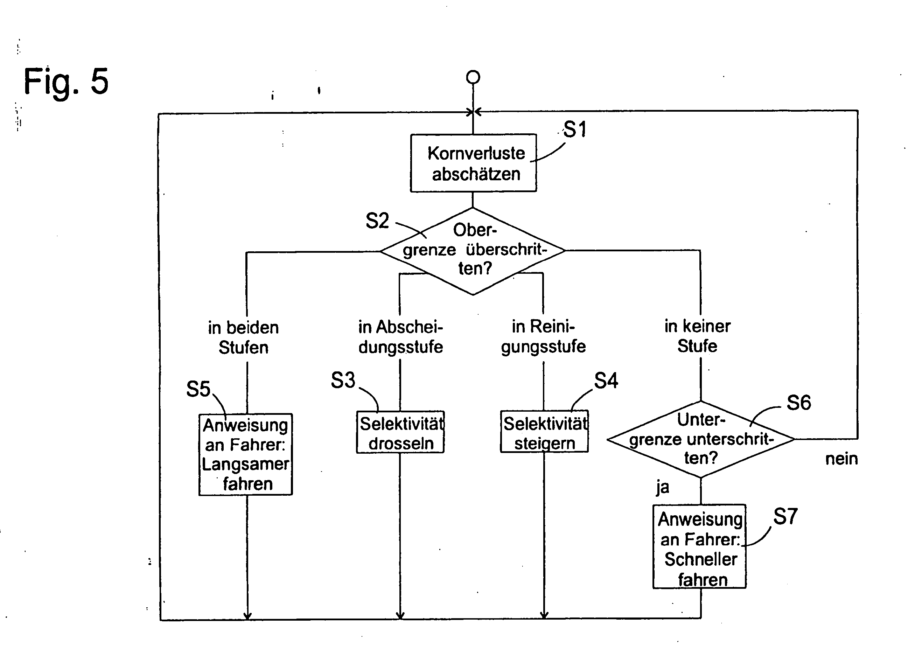

In Fig. 5 ist ein Flussdiagramm eines Verfahrens dargestellt, das in der Steuereinheit 25 abgearbeitet wird, um das anhand der Fig. 4a bis 4d erläuterte Steuerprinzip zu realisieren. In einem ersten Schritt S1 erfasst die Steuereinheit anhand der von den Kornsensoren 28, 29 gelieferten Signale die Kornverluste in Abscheidungs- und Reinigungsstufe. In Schritt S2 werden die so abgeschätzten Verluste mit der für jede Stufe festgelegten Obergrenze verglichen. Wird eine Überschreitung der Obergrenze nur in der Abscheidungsstufe festgestellt, so steuert die Steuereinheit 25 in Schritt S3 die Linearaktoren 24 an, um deren Selektivität zu verringern und so mehr Material in die Reinigungsstufe durchzulassen. Wenn nur in der Reinigungsstufe die Obergrenze überschritten ist, wird umgekehrt in Schritt S4 die Selektivität gesteigert, um die Reinigungsstufe zu entlasten. Dabei kann das Ausmaß der Steigerung oder Verringerung jeweils proportional zum Ausmaß der Grenzwertüberschreitung gewählt werden, um die Kornverluste möglichst schnell wieder in den Sollbereich zurückzuführen, oder es kann mit einer festen Schrittweite der Inkremente bzw. Dekremente gearbeitet werden, und die Korrektur der Selektivität wird so oft wiederholt wie erforderlich, um die Verluste in den zulässigen Bereich zu bringen.

Wenn die Verluste in beiden Stufen die zulässige Obergrenze überschreiten, kann dies nicht durch eine Veränderung der Selektivität kompensiert werden; in diesem Fall wird in Schritt S5 eine Nachricht an den Fahrer des Mähdreschers ausgegeben, um diesen zu veranlassen, die Fahrgeschwindigkeit des Mähdreschers zurückzunehmen und auf diese Weise den Erntegutdurchsatz zu drosseln. Wenn in keiner Stufe die Obergrenzen des Kornverlustes überschritten werden, wird in Schritt S6 überprüft, ob stattdessen in wenigstens einer Stufe eine Untergrenze unterschritten wird, die um einige Prozent oder einige zehn Prozent unterhalb der entsprechenden Obergrenze liegt. Wenn dies nicht der Fall ist, sind die Selektivität und die Fahrgeschwindigkeit des Mähdreschers korrekt eingestellt, und das Verfahren kehrt unmittelbar zum Schritt S1 zurück. Wenn eine Unterschreitung festgestellt wird, so bedeutet dies, dass der Mähdrescher unterhalb seiner Leistungsgrenze und damit unwirtschaftlich arbeitet, und es wird in Schritt S7 eine Anweisung an den Fahrer ausgegeben, die Geschwindigkeit des Mähdreschers zu erhöhen, um den Erntegutdurchsatz zu steigern.

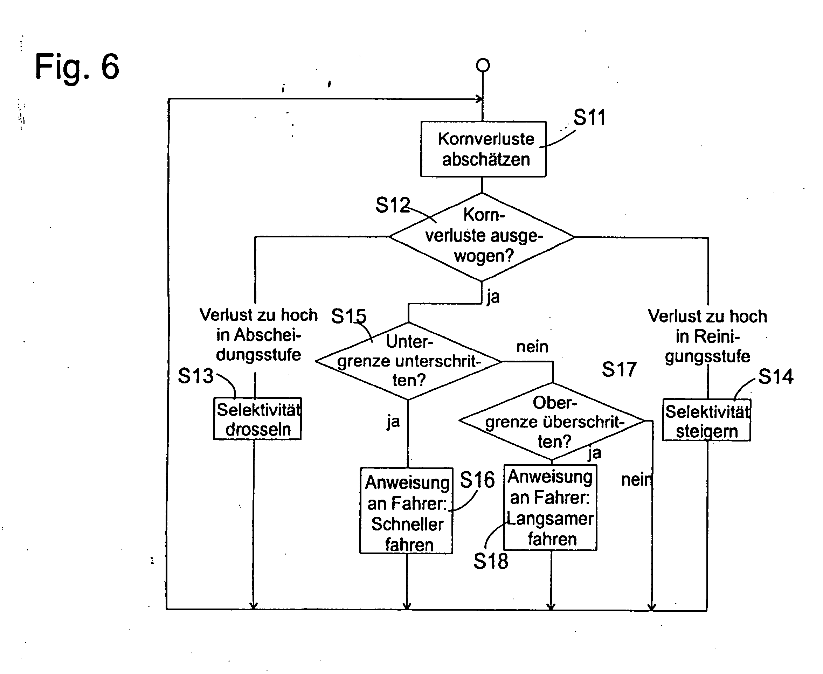

Fig. 6 zeigt eine Abwandlung des Steuerverfahrens. Hier werden zunächst in Schritt S11 die Kornverluste beider Stufen abgeschätzt. Schritt S12 prüft, ob die Verluste in beiden Stufen ausgewogen sind, d.h. es wird geprüft, ob die Verluste einer Stufe in einem als Funktion der abgeschätzten Verluste der anderen Stufe vorab definierten Intervall liegen. Das Intervall kann nach diversen Kriterien definiert sein, z.B. so, dass ein vorgegebener Gesamtverlust beider Stufen nicht überschritten wird, dass der Energieverbrauch minimiert wird etc. Sind die Verluste in der einen oder anderen Richtung unausgewogen, wird zunächst in den Schritten S13 oder S14 die Selektivität korrigiert. Erst wenn nach eventuell wiederholter Ausführung dieser Schritte die Verluste als ausgewogen akzeptiert werden, wird geprüft (S15), ob die Untergrenze der Verluste unterschritten ist. Falls ja, ergeht Anweisung an den Fahrer, schneller zu fahren; falls nein, wird in Schritt S17 die Einhaltung der Obergrenze überprüft und ggf. der Fahrer angewiesen (S18), langsamer zu fahren.

### Bezugszeichen

- 1: Fördereinrichtung
- 2: Drescheinrichtung
- 3: Dreschtrommel
- 4: Dreschkorb
- 5: Leittrommel
- 6: Abscheideeinrichtung
- 7: Gehäuse
- 8: Förderorgan
- 9: Rippe
- 10: Abscheidekorb
- 11: Förderboden
- 12: Rückführboden
- 13: Rutsche
- 14: Gebläse
- 15: Siebboden
- 16: 1. Leitboden
- 17: Schnecke
- 18: 2. Leitboden
- 19: Schnecke
- 20: Schnecke
- 21: Segment
- 22: Segment
- 23: Lamelle
- 24: Linearaktuator
- 25: Steuereinheit
- 26: Kornsensor
- 27: Kornsensor
- 28: Kornsensor
- 29: Kornsensor

## Patentansprüche

1. Verfahren zum Trennen eines Erntegutstroms, der Nutzmaterial und Abfallmaterial enthält, in einen Nutzmaterialstrom und einen Abfallmaterialstrom, in denen jeweils das Nutzmaterial bzw. das Abfallmaterial konzentriert sind, bei dem in einem ersten Schritt der Erntegutstrom mit einer ersten Selektivität in einen vorgereinigten Strom, der einen wesentlichen Anteil des Nutzmaterials und einen Rest des Abfallmaterials enthält, und einen ersten Abfallmaterialstrom, der einen wesentlichen Anteil des Abfallmaterials und einen Rest des Nutzmaterials enthält, zerlegt wird und in wenigstens einem zweiten Schritt der vorgereinigte Strom mit einer von seinem Durchsatz abhängigen zweiten Selektivität in den Nutzmaterialstrom und einen zweiten Abfallmaterialstrom zerlegt wird, der einen wesentlichen Anteil an Abfallmaterial und einen Rest des Nutzmaterials enthält, **dadurch gekennzeichnet, dass** laufend wenigstens eine mit der Menge an Nutzmaterial in den Abfallmaterialströmen verknüpfte Größe erfasst wird (S1, S11) und die erste Selektivität anhand dieser Größe unabhängig vom Durchsatz des Erntegutstroms gesteuert wird.

2. Verfahren nach Anspruch 1, **dadurch gekennzeichnet, dass** zu jedem der zwei Abfallmaterialströme eine mit der Menge an Nutzmaterial in diesem Abfallmaterialstrom verknüpfte Größe erfasst wird (S1, S11).

3. Verfahren nach einem der vorhergehenden Ansprüche, **dadurch gekennzeichnet, dass** die in einem Abfallmaterialstrom enthaltene Menge an Nutzmaterial durch Messung an dem Abfallmaterialstrom nach dem Trennschritt erfasst wird (S1, S11).

4. Verfahren nach Anspruch 1 oder 2, **dadurch gekennzeichnet, dass** die in einem Abfallmaterialstrom enthaltene Menge an Nutzmaterial erfasst wird anhand einer Messung des Materialdurchsatzes des Trennschritts, der den Abfallmaterialstrom ergibt.

5. Verfahren nach einem der vorhergehenden Ansprüche, **dadurch gekennzeichnet, dass** im zweiten Trennschritt ferner ein Reststrom abgeschieden wird, der dem ersten Trennschritt wieder zugeführt wird.

6. Verfahren nach Anspruch 5, **dadurch gekennzeichnet, dass** die im zweiten Abfallmaterialstrom enthaltene Menge an Nutzmaterial erfasst wird anhand einer Messung des Materialdurchsatzes des Reststroms.

7. Verfahren nach einem der vorhergehenden Ansprüche, **dadurch gekennzeichnet, dass** die erste Selektivität gesteigert wird (S4, S14), wenn eine Obergrenze des Nutzmaterialanteils im zweiten Abfallmaterialstrom überschritten wird.

8. Verfahren nach einem der vorhergehenden Ansprüche, **dadurch gekennzeichnet, dass** die erste Selektivität gedrosselt wird (S3, S13), wenn eine Obergrenze des Nutzmaterialanteils im ersten Abfallmaterialanteil überschritten wird.

9. Verfahren nach einem der vorhergehenden Ansprüche, **dadurch gekennzeichnet, dass** die Obergrenzen für beide Abfallmaterialströme gleich oder ungleich festgelegt werden.

10. Verfahren nach einem der vorhergehenden Ansprüche, **dadurch gekennzeichnet, dass** der Durchsatz des Erntegutstroms verringert wird (S5, S18), wenn erfasst wird, dass die Anteile an Nutzmaterial in beiden Abfallmaterialströmen einen Grenzwert überschreiten, und dass er erhöht wird (S7, S16), wenn die Anteile einen Grenzwert unterschreiten.

11. Verfahren nach Anspruch 9, **dadurch gekennzeichnet, dass** es in einer fahrenden Erntemaschine eingesetzt wird, und dass zum Erhöhen und/oder Verringern des Durchsatzes des Erntegutstroms die Fahrgeschwindigkeit der Erntemaschine angepasst wird.

12. Verfahren nach Anspruch 11, **dadurch gekennzeichnet, dass** die Fahrgeschwindigkeit der Erntemaschine automatisch gesteuert wird.

13. Verfahren nach Anspruch 11, **dadurch gekennzeichnet, dass** ein Hinweis an einen Bediener der Erntemaschine erzeugt wird, die Fahrgeschwindigkeit der Erntemaschine zu erhöhen bzw. zu verringern (S5, S7, S16, S18).

14. Verfahren nach einem der vorhergehenden Ansprüche, **dadurch gekennzeichnet, dass** der Erntegutstrom aus Getreidehalmen, der Nutzmaterialstrom im Wesentlichen aus Körnern besteht und der Abfallmaterialstrom im Wesentlichen aus Nichtkornbestandteilen besteht.

15. Vorrichtung zum Trennen eines Erntegutstroms, der Nutzma-terial und Abfallmaterial enthält, in einen Nutzmaterialstrom und einen Abfallmaterialstrom, in denen jeweils das Nutzmaterial bzw. das Abfallmaterial konzentriert sind, mit einer ersten Trennstufe (2, 6), in der der Erntegutstrom mit einer ersten Selektivität in einen vorgereinigten Strom, der einen wesentlichen Anteil des Nutzmaterials und einen Rest des Abfallmaterials enthält, und einen ersten Abfallmaterialstrom, der einen wesentlichen Anteil des Abfallmaterials und einen Rest des Nutzmaterials enthält, zerlegt wird, und einer zweiten Trennstufe (11, 12, 14, 15), in der der vorgereinigte Strom mit einer von seinem Durchsatz abhängigen zweiten Selektivität in den Nutzmaterialstrom und einen zweiten Abfallmaterialstrom zerlegt wird, der einen wesentlichen Anteil an Abfallmaterial und einen Rest des Nutzmaterials enthält, **dadurch gekennzeichnet, dass** die Vorrichtung wenigstens einen Sensor (28, 29) zum Erfassen einer mit der Menge an Nutzmaterial in den Abfallmaterialströmen verknüpften Größe sowie Mittel (23, 24, 25, 9) zum Steuern der ersten Selektivität unabhängig vom Durchsatz des Erntegutstroms umfasst.

16. Vorrichtung nach Anspruch 15, **dadurch gekennzeichnet, dass** die Mittel zum Steuern der ersten Selektivität eine Steuereinheit (25), die an den wenigstens einen Sensor (28, 29) angeschlossen ist, sowie durch die Steuereinheit (25) verstellbare Elemente (3) der ersten Trennstufe umfasst.

17. Vorrichtung nach Anspruch 15 oder 16, **dadurch gekennzeichnet, dass** sie eine fahrbare Erntemaschine ist.

18. Vorrichtung nach Anspruch 17, **dadurch gekennzeichnet, dass** die Steuereinheit (25) an ein Antriebsaggregat der Vorrichtung gekoppelt ist, um die Fahrgeschwindigkeit der Vorrichtung zu verringern, wenn die Anteile an Nutzmaterial in beiden Abfallmaterialströmen einen Grenzwert überschreiten und/oder zu erhöhen, wenn sie einen Grenzwert unterschreiten.

19. Vorrichtung nach Anspruch 17, **dadurch gekennzeichnet, dass** die Steuereinheit (25) an ein Anzeigeelement der Vorrichtung gekoppelt ist, um einem Bediener eine Aufforderung anzuzeigen, die Fahrgeschwindigkeit der Vorrichtung zu verringern, wenn die Anteile an Nutzmaterial in beiden Abfallmaterialströmen einen Grenzwert überschreiten bzw. sie zu erhöhen, wenn die Selektivitäten einen Grenzwert unterschreiten.

20. Vorrichtung nach einem der Ansprüche 15 bis 19, **dadurch gekennzeichnet, dass** die erste Trennstufe (2, 6) einen wenigstens auf zumindest einem Teil seines Umfangs von einem Korb (10a) ummantelten Rotor (8) umfasst.

21. Vorrichtung nach einem der Ansprüche 15 bis 19, **dadurch gekennzeichnet, dass** die erste Trennstufe (2, 6) eine Drehtrommel mit nachgeordnetem Hordenschüttler umfasst.

22. Vorrichtung nach Anspruch 20, **dadurch gekennzeichnet, dass** der regelbare Parameter der Querschnitt von Durchtritts-öffnungen des Korbes (10a) ist.

23. Vorrichtung nach Anspruch 20, **dadurch gekennzeichnet, dass** der regelbare Parameter die Neigung einer drehbaren Rippe (9) in Bezug auf einen Rotor (18) der ersten Trennstufe (2, 6) ist.

24. Vorrichtung nach einem der Ansprüche 15 bis 23, **dadurch gekennzeichnet, dass** wenigstens einer der Sensoren (28, 29) an einem der Abfallmaterialströme angeordnet ist, um einen Nutzmaterialanteil in diesem Strom zu messen.

25. Vorrichtung nach,einem der Ansprüche 15 bis 24, **dadurch gekennzeichnet, dass** wenigstens einer der Sensoren (26, 27) an einer der Trennstufen angeordnet ist, um deren Durchsatz zu messen, und dass die Steuereinheit eingerichtet ist, den Nutzmaterialanteil im von dieser Trennstufe erzeugten Abfallmaterialstrom anhand des Durchsatzes zu erfassen.

26. Vorrichtung nach einem der Ansprüche 15 bis 25, **dadurch gekennzeichnet, dass** die zweite Trennstufe einen Restmaterialstrom erzeugt, der über einen Rückführkanal (18, 19) der ersten Trennstufe (2, 6) wieder zugeführt wird.

27. Vorrichtung nach Anspruch 26, **dadurch gekennzeichnet, dass** zumindest einer der Sensoren an dem Rückführkanal zum Erfassen des Durchsatzes des Restmaterialstroms angeordnet ist, und dass die Steuereinheit eingerichtet ist, den Nutzmaterialanteil im von der zweiten Trennstufe (11, 12, 14, 15) erzeugten Abfallmaterialstrom anhand des Durchsatzes zu erfassen.

## Claims

1. A method of separating a crop material flow which contains useful material and waste material into a useful material flow and a waste material flow, in each of which the useful material and the waste material are respectively concentrated, wherein in a first step the crop material flow is divided with a first selectivity into a pre-cleaned flow which contains a substantial portion of the useful material and a residue of the waste material and a first waste material flow which contains a substantial portion of the waste material and a residue of the useful material and in at least one second step the pre-cleaned flow is divided with a second selectivity dependent on its throughput into the useful material flow and a second waste material flow which contains a substantial portion of waste material and a residue of the useful material, **characterised in that** at least one parameter linked to the amount of useful material in the waste material flows is continuously detected (S1, S11) and the first selectivity is controlled on the basis of said parameter independently of the throughput of the crop material flow.

2. A method according to claim 1 **characterised in that** for each of the two waste material flows a parameter linked to the amount of useful material in said waste material flow is detected (S1, S11).

3. A method according to one of the preceding claims **characterised in that** the amount of useful material contained in a waste material flow is detected by measurement on the waste material flow after the separating step (S1, S11).

4. A method according to claim 1 or claim 2 **characterised in that** the amount of useful material contained in a waste material flow is detected on the basis of a measurement of the material throughput of the separating step which affords the waste material flow.

5. A method according to one of the preceding claims **characterised in that** in the second separating step a residual flow is also separated off, which is fed to the first separating step again.

6. A method according to claim 5 **characterised in that** the amount of useful material contained in the second waste material flow is detected on the basis of a measurement of the material throughput of the residual flow.

7. A method according to one of the preceding claims **characterised in that** the first selectivity is increased (S4, S14) when an upper limit of the portion of useful material in the second waste material flow is exceeded.

8. A method according to one of the preceding claims **characterised in that** the first selectivity is throttled (S3, S13) when an upper limit of the portion of useful material in the first waste material portion is exceeded.

9. A method according to one of the preceding claims **characterised in that** the upper limits for both waste material flows are defined as equal or unequal.

10. A method according to one of the preceding claims **characterised in that** the throughput of the crop material flow is reduced (S5, S18) when it is detected that the portions of useful material in both waste material flows exceed a limit value and that it is increased (S7, S16) when the portions fall below a limit value.

11. A method according to claim 9 **characterised in that** it is used in a travelling harvesting machine and that the travel speed of the harvesting machine is adapted to increase and/or reduce the throughput of the crop material flow.

12. A method according to claim 11 **characterised in that** the travel speed of the harvesting machine is automatically controlled.

13. A method according to claim 11 **characterised in that** an indication is generated to an operator of the harvesting machine to increase or reduce the travel speed of the harvesting machine (S5, S7, S16, S18).

14. A method according to one of the preceding claims **characterised in that** the crop material flow comprises grain stalks, the useful material flow substantially comprises grains and the waste material flow substantially comprises non-grain components.

15. Apparatus for separating a crop material flow which contains useful material and waste material into a useful material flow and a waste material flow, in each of which the useful material and the waste material is respectively concentrated, comprising a first separating stage (2, 6) in which the crop material flow is divided with a first selectivity into a pre-cleaned flow which contains a substantial portion of the useful material and a residue of the waste material and a first waste material flow which contains a substantial portion of the waste material and a residue of the useful material, and a second separating stage (11, 12, 14, 15) in which the pre-cleaned flow is divided with a second selectivity dependent on its throughput into the useful material flow and a second waste material flow which contains a substantial portion of waste material and a residue of the useful material, **characterised in that** the apparatus includes at least one sensor (28, 29) for detecting a parameter linked to the amount of useful material in the waste material flows and means (23, 24, 25, 9) for controlling the first selectivity independently of the throughput of the crop material flow.

16. Apparatus according to claim 15 **characterised in that** the means for controlling the first selectivity includes a control unit (25) which is connected to the at least one sensor (28, 29) and elements (3) of the first separating stage, that are displaceable by the control unit (25).

17. Apparatus according to claim 15 or claim 16 **characterised in that** it is a mobile harvesting machine.

18. Apparatus according to claim 17 **characterised in that** the control unit (25) is coupled to a drive assembly of the apparatus to reduce the travel speed of the apparatus when the portions of useful material in both waste material flows exceed a limit value and/or to increase same when they fall below a limit value.

19. Apparatus according to claim 17 **characterised in that** the control unit (25) is coupled to a display element of the apparatus to indicate to an operator a requirement to reduce the travel speed of the apparatus when the portions of useful material in both waste material flows exceed a limit value or to increase same when the selectivities fall below a limit value.

20. Apparatus according to one of claims 15 to 19 **characterised in that** the first separating stage (2, 6) includes a rotor (8) which at least on a part of its periphery is enclosed by a cage (10a).

21. Apparatus according to one of claims 15 to 19 **characterised in that** the first separating stage (2, 6) includes a rotary drum with straw walker arranged downstream thereof.

22. Apparatus according to claim 20 **characterised in that** the regulatable parameter is the cross-section of through-flow openings in the cage (10a).

23. Apparatus according to claim 20 **characterised in that** the regulatable parameter is the inclination of a rotatable rib (9) in relation to a rotor (18) of the first separating stage (2, 6).

24. Apparatus according to at least one of claims 15 to 23 **characterised in that** at least one of the sensors (28, 29) is arranged at one of the waste material flows to measure a portion of useful material in said flow.

25. Apparatus according to one of claims 15 to 24 **characterised in that** at least one of the sensors (26, 27) is arranged at one of the separating stages to measure the throughput thereof and the control unit is adapted to detect the portion of useful material in the waste material flow produced by said separating stage on the basis of the throughput.

26. Apparatus according to one of claims 15 to 25 **characterised in that** the second separating stage produces a residual material flow which is fed to the first separating stage (2, 6) again by way of a return passage (18, 19).

27. Apparatus according to claim 26 **characterised in that** at least one of the sensors is arranged at the return passage for detecting the throughput of the residual material flow and the control unit is adapted to detect the portion of useful material in the waste material flow produced by the second separating stage (11, 12, 14, 15) on the basis of the throughput.

## Revendications

1. Procédé pour séparer un flux de produit récolté, qui contient de la matière utile et de la matière de rebut, en un flux de matière utile et un flux de matière de rebut, dans lesquels la matière utile et la matière de rebut sont respectivement concentrées, selon lequel, dans une première étape, le flux de produit récolté est divisé avec une première sélectivité en un flux prénettoyé, qui contient une fraction majoritaire de matière utile et un reste de matière de rebut, et en un premier flux de matière de rebut, qui contient une fraction majoritaire de matière de rebut et un reste de matière utile, et dans au moins une deuxième étape, le flux prénettoyé est divisé avec une deuxième sélectivité dépendant de son débit en flux de matière utile et en un deuxième flux de matière de rebut qui contient une fraction majoritaire de matière de rebut et un reste de matière utile, **caractérisé en ce qu'**au moins une grandeur liée à la quantité de matière utile dans le flux de matière de rebut est enregistrée en continu (S1, S11) et la première sélectivité est commandée à l'aide de cette grandeur indépendamment du débit du flux de produit récolté.

2. Procédé selon la revendication 1, **caractérisé en ce qu'**une grandeur liée à la quantité de matière utile dans ce flux de matière de rebut est enregistrée pour chacun des deux flux de matière de rebut (S1, S11).

3. Procédé selon l'une des revendications précédentes, **caractérisé en ce que** la quantité de matière utile contenue dans un flux de matière de rebut est enregistrée en mesurant le flux de matière de rebut après l'étape de séparation (S1, S11).

4. Procédé selon la revendication 1 ou 2, **caractérisé en ce que** la quantité de matière utile contenue dans un flux de matière de rebut est enregistrée en mesurant le débit de matière de l'étape de séparation produisant le flux de matière de rebut.

5. Procédé selon l'une des revendications précédentes, **caractérisé en ce que dans la deuxième étape de** séparation, un flux résiduel est en outre séparé, lequel est ramené à la première étape de séparation.

6. Procédé selon la revendication 5, **caractérisé en ce que** la quantité de matière utile contenue dans le deuxième flux de matière de rebut est enregistrée en mesurant le débit de matière du flux résiduel.

7. Procédé selon l'une des revendications précédentes, **caractérisé en ce que** la première sélectivité est augmentée (S4, S14) quand une limite supérieure de la fraction de matière utile dans le deuxième flux de matière de rebut est dépassée.

8. Procédé selon l'une des revendications précédentes, **caractérisé en ce que** la première sélectivité est réduite (S3, S13) quand une limite supérieure de la fraction de matière utile dans la première fraction de matière de rebut est dépassée.

9. Procédé selon l'une des revendications précédentes, **caractérisé en ce que** les limites supérieures définies pour les deux flux de matière de rebut sont égales ou inégales.

10. Procédé selon l'une des revendications précédentes, **caractérisé en ce que** le débit du flux de produit récolté est diminué (S5, S18) quand on constate que les fractions de matière utile dans les deux flux de matière de rebut dépassent une valeur limite, et **en ce qu'**il est augmenté (S7, S16) quand les fractions soupassent une valeur limite.

11. Procédé selon la revendication 9, **caractérisé en ce qu'**il est mis en oeuvre dans une machine de récolte automotrice et que, pour augmenter et/ou diminuer le débit du flux de produit récolté, on adapte la vitesse de marche de la machine de récolte.

12. Procédé selon la revendication 11, **caractérisé en ce que** la vitesse de marche de la machine de récolte est commandée automatiquement.

13. Procédé selon la revendication 11, **caractérisé en ce qu'**un signal destiné à un utilisateur de la machine de récolte est généré pour augmenter, respectivement diminuer la vitesse de marche de la machine de récolte (S5, S7, S16, S18).

14. Procédé selon l'une des revendications précédentes, **caractérisé en ce que** le flux de produit récolté est composé de tiges de céréales, le flux de matière utile essentiellement de grains, et le flux de matière de rebut essentiellement de constituants autres que le grain.

15. Dispositif pour séparer un flux de produit récolté, qui contient de la matière utile et de la matière de rebut, en un flux de matière utile et un flux de matière de rebut, dans lesquels la matière utile et la matière de rebut sont respectivement concentrées, avec un premier étage de séparation (2, 6), dans lequel le flux de produit récolté est divisé avec une première sélectivité en un flux prénettoyé, qui contient une fraction majoritaire de matière utile et un reste de matière de rebut, et en un premier flux de matière de rebut, qui contient une fraction majoritaire de matière de rebut et un reste de matière utile, et avec un deuxième étage de séparation (11, 12, 14, 15), dans lequel le flux prénettoyé est divisé avec une deuxième sélectivité dépendant de son débit en flux de matière utile et en un deuxième flux de matière de rebut qui contient une fraction majoritaire de matière de rebut et un reste de matière utile, **caractérisé en ce que** le dispositif comprend au moins un capteur (28, 29) pour enregistrer une grandeur liée à la quantité de matière utile dans le flux de matière de rebut ainsi que des moyens (23, 24, 25, 9) pour commander la première sélectivité indépendamment du débit du flux de produit récolté.

16. Dispositif selon la revendication 15, **caractérisé en ce que** les moyens pour commander la première sélectivité comprennent une unité de commande (25), qui est connectée audit au moins un capteur (28, 29), ainsi que des éléments (3) du premier étage de séparation qui sont réglables par l'unité de commande (25).

17. Dispositif selon la revendication 15 ou 16, **caractérisé en ce qu'**il est une machine de récolte automotrice.

18. Dispositif selon la revendication 17, **caractérisé en ce que** l'unité de commande (25) est couplée à un organe d'entraînement du dispositif pour diminuer la vitesse de marche du dispositif quand les fractions de matière utile dans les deux flux de matière de rebut dépassent une valeur limite et/ou pour l'augmenter quand elles soupassent une valeur limite.

19. Dispositif selon la revendication 17, **caractérisé en ce que** l'unité de commande (25) est couplée à un élément d'affichage du dispositif pour inviter l'utilisateur à diminuer la vitesse de marche du dispositif quand les fractions de matière utile dans les deux flux de matière de rebut dépassent une valeur limite et/ou à l'augmenter quand les sélectivités soupassent une valeur limite.

20. Dispositif selon l'une des revendications 15 à 19, **caractérisé en ce que** le premier étage de séparation (2, 6) comprend au moins un rotor (8) entouré par un panier (10a) sur au moins une partie de sa périphérie.

21. Dispositif selon l'une des revendications 15 à 19, **caractérisé en ce que** le premier étage de séparation (2, 6) comprend un batteur avec secoueur à claies en aval.

22. Dispositif selon la revendication 20, **caractérisé en ce que** le paramètre réglable est la section des ouvertures de passage du panier (10a).

23. Dispositif selon la revendication 20, **caractérisé en ce que** le paramètre réglable est l'inclinaison d'une nervure pivotante (9) par rapport à un rotor (18) du premier étage de séparation (2, 6).

24. Dispositif selon l'une des revendications 15 à 23, **caractérisé en ce qu'**au moins un des capteurs (28, 29) est disposé sur un des flux de matière de rebut pour mesurer une fraction de matière utile dans ce flux.

25. Dispositif selon l'une des revendications 15 à 24, **caractérisé en ce qu'**au moins un des capteurs (26, 27) est disposé sur un des étages de séparation pour mesurer son débit, et **en ce que** l'unité de commande est conçue pour enregistrer, à l'aide du débit, la fraction de matière utile dans le flux de matière de rebut produit par cet étage de séparation.

26. Dispositif selon l'une des revendications 15 à 25, **caractérisé en ce que** le deuxième étage de séparation produit un flux de matière résiduelle qui est ramené au premier étage de séparation (2, 6) par un canal de retour (18, 19).

27. Dispositif selon la revendication 26, **caractérisé en ce qu'**au moins un des capteurs est disposé sur le canal de retour pour enregistrer le débit du flux de matière résiduelle, et **en ce que** l'unité de commande est conçue pour enregistrer, à l'aide du débit, la fraction de matière utile dans le flux de matière de rebut produit par le deuxième étage de séparation (11, 12, 14, 15).
